# EUROPEAN PATENT APPLICATION

(11) **EP 4 554 287 A1**
(43) Date of publication of application: **14.05.2025**
(21) Application number: 22949894.4
(22) Date of filing: 08.07.2022
(51) Int. Cl.: H04W 52/02

(54) **WIRELESS COMMUNICATION METHOD AND TERMINAL DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Taor, Simon Edward William
(86) International application number: PCT/CN2022/104670
(87) International publication number: WO 2024/007312

(57) **Abstract**

A method for wireless communication and a terminal device are provided. The method including: transmitting, by a terminal device, a first signal using a target transmission manner, where the target transmission manner includes an active transmission manner and/or a back scattering manner. The first signal is transmitted in a suitable transmission manner, so that both power consumption and transmission performance of the terminal device are taken into account.

## Description

### TECHNICAL FIELD

Embodiments of the present disclosure relate to the field of communication, and in particular relate to a method for wireless communication and a terminal device.

### BACKGROUND

In some scenarios, a zero-power terminal may not actively transmit signals, but send information by back scattering carrier signals. In practical applications, for some zero-power terminals with stronger capabilities, information may also be sent by actively transmitting signals. Therefore, when a zero-power terminal supports both communication manners of back scattering and active transmission, how to transmit signals is an urgent problem to be solved.

### SUMMARY

Embodiments of the present disclosure provide a method for wireless communication and a terminal device. The terminal device may transmit a first signal using an active transmission manner and/or a back scattering manner. This is conducive to transmitting the first signal in a suitable transmission manner, so that both power consumption and transmission performance of the terminal device are taken into account.

In a first aspect, a method for wireless communication is provided. The method includes: transmitting, by a terminal device, a first signal using a target transmission manner. The target transmission manner includes an active transmission manner and/or a back scattering manner.

In a second aspect, a terminal device is provided. The terminal device implements the method in the first aspect or any possible implementation of the first aspect. Specifically, the terminal device includes a unit for implementing the method in the first aspect or any possible implementation of the first aspect.

In a third aspect, a terminal device is provided. The terminal device includes: a processor and a memory. The memory is configured to store a computer program, and the processor is configured to invoke and execute the computer programs stored in the memory to implement the method in the first aspect or various implementations thereof.

In a fourth aspect, a chip is provided to implement the method in the first aspect or various implementations thereof.

Specifically, the chip includes: a processor configured to invoke and execute computer programs in a memory, so as to cause a device equipped with the chip to implement the method in the first aspect or various implementations thereof.

In a fifth aspect, a computer-readable storage medium is provided to store a computer program. The computer program causes a computer to implement the method in the first aspect or various implementations thereof.

In a sixth aspect, a computer program product is provided. The computer program product includes a computer program instruction, and the computer program instruction causes a computer to implement the method in the first aspect or various implementations thereof.

In a seventh aspect, a computer program is provided. When executed in a computer, the computer program causes the computer to implement the method in the first aspect or various implementations thereof.

Based on the foregoing technical solution, the terminal device may transmit the first signal using the active transmission manner and/or the back scattering manner. This is conducive to transmitting the first signal in an appropriate transmission manner, so that both a power consumption and a transmission performance of the terminal device are taken into account.

### BRIEF DESCRIPTION OF THE DRAWINGS

FIG. 1 is an illustrative diagram of a communication system architecture provided by the embodiments of the present disclosure.
FIG. 2 is an illustrative diagram of a zero-power communication system according to an example of the present disclosure.
FIG. 3 is a schematic diagram of power harvesting according to an embodiment of the present disclosure.
FIG. 4 is a schematic diagram of back scattering communication according to an embodiment of the present disclosure.
FIG. 5 is a circuit schematic diagram of resistive load modulation according to an embodiment of the present disclosure.
FIG. 6 is an illustrative diagram of a format of a physical layer protocol data unit (PPDU) frame.
FIG. 7 is an illustrative diagram of a method for wireless communication provided by the embodiments of the present disclosure.
FIG. 8 is an illustrative diagram of a format of a PPDU frame provided by the embodiments of the present disclosure.
FIG. 9 is an illustrative diagram of a signal transmission manner provided by the embodiments of the present disclosure.
FIG. 10 is an illustrative block diagram of a terminal device provided by the embodiments of the present application.
FIG. 11 is an illustrative block diagram of a communication device provided by another embodiment of the present disclosure.
FIG. 12 is an illustrative block diagram of a chip provided by the embodiments of the present disclosure.
FIG. 13 is an illustrative block diagram of a communication system provided by the embodiments of the present disclosure.

### DETAILED DESCRIPTION

The technical solutions in the embodiments of the present disclosure will be described below in combination with the drawings in the embodiments of the present disclosure. Obviously, the embodiments described are some of the embodiments of the present disclosure, instead of all of them. For the embodiments in the present disclosure, all the other embodiments obtained by those of ordinary skills in the art without any creative work are within the scope of protection of the present disclosure.

The technical solutions in the embodiments of the present disclosure may be applied to various communication systems, for example: a global system of mobile communication (GSM) system, a code division multiple access (CDMA) system, a wideband code division multiple access (WCDMA) system, general packet radio service (GPRS), a long term evolution (LTE) system, an advanced long term evolution (LTE-A) system, a new radio (NR) system, an evolution system of NR system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), wireless fidelity (WiFi), a 5th-generation (5G) system, a cellular Internet of Things system, a cellular passive Internet of Things system or other communication systems.

Generally speaking, the number of connections supported by traditional communication systems is limited and easy to be achieved. However, with the development of communication technology, mobile communication systems will not only support traditional communications, but also support communications, such as device to device (D2D) communication, machine to machine (M2M) communication, machine type communication (MTC), vehicle to vehicle (V2V) communication, or vehicle to everything (V2X) communication. The embodiments of the present disclosure may also be applied to these communication systems.

Optionally, the communication system in the embodiments of the present disclosure may be applied to a carrier aggregation (CA) scenario, may also be applied to a dual connectivity (DC) scenario, and may further be applied to standalone (SA).

Optionally, the communication system in the embodiments of the present disclosure can be applied to an unlicensed spectrum, where the unlicensed spectrum may also be considered as a shared spectrum; and alternatively, the communication system in the embodiments of the present disclosure may be applied to a licensed spectrum, where the licensed spectrum may also be considered as an unshared spectrum.

Various embodiments in the embodiments of the present disclosure are described in combination with a network device and a terminal device, where the terminal device may also be referred to as a user equipment (UE), an access terminal, a user unit, a user station, a mobile station, a mobile stage, a remote station, a remote terminal, a mobile device, a user terminal, a terminal, a wireless communication device, a user agent or a user apparatus, a zero-power terminal, etc.

In the embodiments of the present disclosure, the network device may be a device for communicating with a mobile device. The network device may be an access point (AP) in WLAN, a base transceiver station (BTS) in GSM or CDMA, or a Node B (NB) in WCDMA. The network device may be a device in LTE, such as an evolutional Node B (eNB or eNodeB), a relay station or an AP, a vehicle-mounted device, a wearable device, or may be a network device (gNB) in an NR network, a network device in a cellular Internet of Things, a network device in a cellular passive Internet of Things, a network device in a future evolved public land mobile network (PLMN) network, or a network device in an NTN network.

As an example and not a limitation, in the embodiments of the present disclosure, the network device may have a mobile feature, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may be a base station set up in a location such as land or water.

In the embodiments of the present disclosure, the network device may provide services for a cell, and the terminal device communicates with the network device through transmission resources (e.g., frequency domain resources, or called spectrum resources) used by the cell. The cell may be a cell corresponding to the network device (e.g., a base station), and the cell may belong to a macro base station or a base station corresponding to a small cell. The small cell here may include: a metro cell, a micro cell, a pico cell, a femto cell, etc. These small cells have the characteristics of small coverage and low transmission power, and are suitable for providing highspeed data transmission services.

The terminal device may be a station (STA) in a WLAN, or may be a cellular phone, a cordless phone, a session initiation protocol (SIP) phone, a wireless local loop (WLL) station, a personal digital assistant (PDA) device, a handheld device or a computing device with a wireless communication function, or another processing device connected to a wireless modem, a vehicle-mounted device, a wearable device, a terminal device in a next generation communication system such as a NR network, or a terminal device in a future evolved PLMN, a terminal device in a cellular Internet of Things, or a terminal device in a cellular passive Internet of Things.

In some embodiments, the terminal device may be a mobile phone with WLAN or WiFi technology, a pad, a computer, a virtual reality (VR) device, an augmented reality (AR) device, a wireless device in industrial control, a set-top box, a wireless device in self driving, a vehicle-mounted communication device, a wireless device in remote medical, a wireless device in smart grid, a wireless device in transportation safety, a wireless device in smart city, or a wireless device in smart home.

In the embodiments of the present disclosure, the terminal device may be deployed on land, including indoors or outdoors, handheld, wearable, or vehicle-mounted; it may also be deployed on the water (such as a ship); and it may further be deployed in the air (such as an airplane, a balloon, and a satellite).

In the embodiments of the present disclosure, the terminal device may be a mobile phone, a pad, a computer with a wireless transceiver function, a VR terminal device, an AR terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home.

As an example but not a limitation, in the embodiments of the present disclosure, the terminal device may also be a wearable device. A wearable device may also be called a wearable smart device, which is a general term for a device that can be worn through intelligent design and development by applying wearable technology to daily wear, such as glasses, gloves, watches, clothing and shoes. A wearable device is a portable device that is worn directly on a body or integrated into clothes or accessories of a user. A wearable device is not only a hardware device, but also achieves powerful functions through software support, data interaction, and cloud interaction. In a broad sense, a wearable smart device includes a full-featured and large-sized device that can achieve complete or partial functions without relying on a smart phone, for example, smart watches or smart glasses, and it also includes a device that only focuses on a certain type of application function and needs to be used in cooperation with another device such as a smart phone, for example, various smart bracelets and smart jewelry for vital sign monitoring.

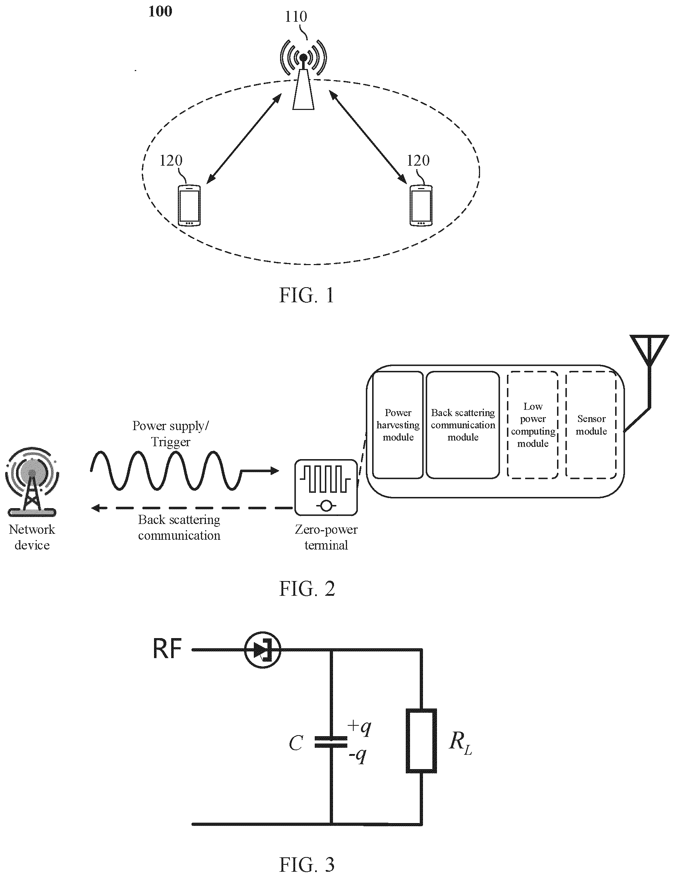

Exemplarily, a communication system 100 applied in the embodiments of the present disclosure is as illustrated in FIG. 1. The communication system 100 may include a network device 110. The network device 110 may be a device in communication with a terminal device 120 (or referred to as a communication terminal or a terminal). The network device 110 may provide a communication coverage for a specific geographical region and may communicate with terminal devices located in the coverage region.

It may be understood that, a device with a communication function in a network/system in the embodiments of the present disclosure may be referred to as a communication device. Taking the communication system 100 -illustrated in FIG. 1 as an example, the communication device may include the network device 110 with a communication function and the terminal device 120, and the network device 110 and the terminal device 120 may be specific devices described above, which will not be repeated here. The communication device may also include other devices in the communication system 100, for example, other network entities such as a network controller and a mobile management entity, which are not limited in the embodiments of the present disclosure.

FIG. 1 exemplarily illustrates one network device and two terminal devices. Optionally, the communication system 100 may include multiple network devices and each network device may include other numbers of terminal devices within its coverage region, which is not limited in the embodiments of the present disclosure.

Optionally, the communication system 100 may also include other network entities such as a network controller and a mobile management entity, which is not limited in the embodiments of the present disclosure.

In some embodiments, the communication system 100 may also include one or more zero-power terminals.

In some embodiments, the network device 110 may be an AP, and the terminal device 120 may be an STA.

In some embodiments, the AP and the STA may be devices applied in an Internet of Vehicles, Internet of Things (IoT) nodes and sensors in an IoT, smart cameras, smart remote controls as well as smart water meters and electric meters in smart home, and sensors in smart city.

In some embodiments, the AP may support an 802.11 technology. The 802.11 technology may include but is not limited to: 802.11be, 802.11ax, 802.11ac, 802.11n, 802.11g, 802.11b, 802.11a and other current and future WLAN technologies of an 802.11 family.

In some embodiments, the STA may support the 802.11 technology. The 802.11 technology may include but is not limited to: 802.11be, 802.11ax, 802.11ac, 802.11n, 802.11g, 802.11b and 802.11a and other current and future WLAN technologies of the 802.11 family.

It may be understood that, the terms "system" and "network" are often used interchangeably in the present text. The term "and/or" in the present text is only an illustration of an association relationship of associated objects, indicating that there may be three relationships. For example, A and/or B may indicate the following three situations: A exists alone, A and B exist at the same time, and B exists alone. In addition, the symbol "/" in the present text generally indicates that context objects are in an "or" relationship.

It may be understood that, the expression "indicate" mentioned in the embodiments of the present disclosure may be a direct indication, an indirect indication, or an indication of an association relationship. For example, the expression that A indicates B may refer to that A directly indicates B, for example, B may be obtained through A; it may also refer to that A indirectly indicates B, for example, A indicates C, and B may be obtained through C; and it may also refer to that A and B have an association relationship.

In the illustration of the embodiments of the present disclosure, the term "correspond" may refer to a direct or an indirect correspondence relationship between the two, or it may also refer to an association relationship between the two, or it may further refer to a relationship between indicating and being indicated or between configuring and being configured.

In the embodiments of the present disclosure, "pre-definition" may be implemented by pre-storing corresponding codes or tables in a device (for example, including a terminal device and a network device) or by other manners that may be used to indicate relevant information, and the specific implementation manner is not limited in the present disclosure. For example, a pre-definition may refer to a definition in a protocol.

In the embodiments of the present disclosure, the "protocol" may refer to a standard protocol in the field of communication, for example, it may include an LTE protocol, an NR protocol, and related protocols used in future communication systems, and the present disclosure is not limited in this regard.

In order to facilitate understanding of the technical solution of the embodiments of the present disclosure, relevant technologies of the present disclosure will be explained.

### 1. Zero-power communication

The key technologies of zero-power communication include power harvesting, back scattering communication, and low power technology.

As illustrated in FIG. 2, a typical zero-power communication system (such as a radio frequency identification (RFID) system) includes a network device (such as a reader-writer of an RFID system) and a zero-power terminal (such as an electronic tag). The network device is configured to transmit a wireless power supply signal and a downlink communication signal to the zero-power terminal, and receive a back scattering signal from the zero-power terminal. A basic zero-power terminal includes a power harvesting module, a back scattering communication module, and a low power computing module. In addition, the zero-power terminal may also have a memory or a sensor for storing some basic information (such as an item identification) or sensor data such as an ambient temperature and an ambient humidity.

For example, the power harvesting module may harvest power carried by a radio wave in space (a radio wave emitted by a network device is illustrated in FIG. 2) to drive the low power computing module of the zero-power terminal and implement back scattering communication. After the zero-power terminal obtains the power, the zero-power terminal may receive a control command from the network device and send data to the network device based on control signaling in a back scattering manner. The data sent may be data stored in the zero-power terminal itself (for example, an identity identification or pre-written information, such as a production date, a brand and a manufacturer of a product). The zero-power terminal may also be equipped with various sensors, so as to report, based on a zero-power mechanism, data collected by various sensors.

The key technologies in the zero-power communication will be described.

### 1. RF power harvesting

As illustrated in FIG. 3, a RF power harvesting module implements harvesting of electromagnetic wave power in space based on the principle of electromagnetic induction, and then obtains power required to drive the zero-power terminal to operate, for example, power used to drive demodulation and modulation module with low power consumption, a sensor, and memory reading. Therefore, a traditional battery is not required for the zero-power terminal.

### 2. Back scattering communication

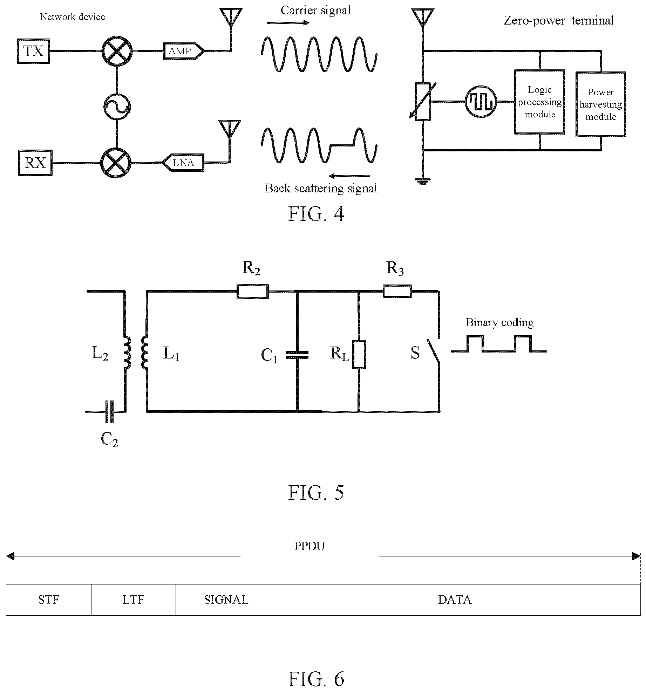

As illustrated in FIG. 4, the zero-power terminal receives a carrier signal sent by the network device, modulates the carrier signal, loads information to be transmitted, and radiates out the modulated signal via an antenna. Such an information transmission process is called back scattering communication. Back scattering and load modulation functions are inseparable. The load modulation refers to adjusting and controlling of circuit parameters of an oscillation circuit of the zero-power terminal according to a beat of a data stream, so that parameters such as a value of an impedance of the zero-power terminal change accordingly, thereby completing the modulation process. The load modulation technology mainly includes two manners: resistive load modulation and capacitive load modulation. In the resistive load modulation, a resistor is connected in parallel to a load, and the resistor is turned on or off based on a control of a binary data stream, as illustrated in FIG. 5. On-off of the resistor may cause a circuit voltage to change, thereby achieving amplitude shift keying (ASK), that is, modulation and transmission of a signal is achieved by adjusting an amplitude of a back scattering signal of the zero-power terminal. Similarly, in the capacitive load modulation, on-off of a capacitor may achieve a change of a circuit resonant frequency, thereby achieving frequency shift keying (FSK), that is, the modulation and transmission of a signal is achieved by adjusting an operating frequency of the back scattering signal of the zero-power terminal.

It can be seen that, the zero-power terminal modulates the carrier signal by means of load modulation, thereby achieving a back scattering communication process. Therefore, the zero-power terminal has significant advantages as follows: (1) The zero-power terminal does not actively emit a signal, and therefore, a complex RF link, such as a power amplifier (PA) and an RF filter, is not required; (2) The zero-power terminal does not need to actively generate a high-frequency signal, and therefore, a high-frequency crystal oscillator is not required; (3) The zero-power terminal performs communication in back scattering communication, and does not need to consume power of the terminal to perform signal transmission.

### 3. Encoding technology

For data transmitted by the zero-power terminal, different forms of codes may be used to represent binary "1" and "0". One of the following coding manners is usually used in a RF identification system: reverse non-return-to-zero (NRZ) encoding, Manchester encoding, unipolar return-to-zero coding, differential bi-phase (DBP) encoding, differential encoding, pulse interval encoding (PIE), bidirectional space coding (FM0), Miller encoding, and differential encoding. Simply saying, different pulse signals are used in different encoding technologies to represent 0 and 1.

In some scenarios, based on a source of power and usage of zero-power terminals, the zero-power terminals may be classified into the following types.

### 1. Passive zero-power terminal

A zero-power terminal (such as an electronic tag in an RFID system) does not require a built-in battery. When a zero-power terminal is close to a network device (such as a reader-writer in the RFID system), the zero-power terminal is within a near field formed by radiation of an antenna of the network device. Therefore, an antenna of the zero-power terminal generates an induced current through electromagnetic induction, and the induced current drives a low-power chip circuit of the zero-power terminal, thereby achieving signal demodulation of a forward link and signal modulation of a reverse link (or called a reflection link). For a back scattering link, the zero-power terminal transmits a signal using a back scattering implementation.

It can be seen that, a passive zero-power terminal does not need to be driven by a built-in battery either for a forward link or a reverse link, and thus is a true zero-power terminal.

A passive zero-power terminal does not require a battery. An RF circuit and a baseband circuit of a passive zero-power terminal are very simple, for example, devices such as a low noise amplifier (LNA), a power amplifier (PA), a crystal oscillator and an analog-to-digital converter (ADC) are not required. Therefore, a passive zero-power terminal has many advantages such as small size, light weight, very low price, and long service life.

### 2. Semi-passive zero-power terminal

For a semi-passive zero-power terminal, a conventional battery is not installed, but the semi-passive zero-power terminal may use an RF power harvesting module to harvest radio wave power and store harvested power in a power storage unit (such as a capacitor). After the power storage unit obtains the power, the power may drive the low-power chip circuit of the zero-power terminal, thereby achieving the signal demodulation of the forward link and the signal modulation of the reverse link. For the back scattering link, the zero-power terminal transmits a signal using the back scattering implementation.

It can be seen that, a semi-passive zero-power terminal does not need to be driven by a built-in battery either for a forward link or a reverse link. Although power stored in the capacitor is used in operation, the power comes from the radio power harvested by the power harvesting module. Therefore, a semi-passive zero-power terminal is also a true zero-power terminal.

The semi-passive zero-power terminal inherits many advantages of the passive zero-power terminal, and therefore, it has many advantages such as small size, light weight, very low price, and long service life.

### 3. Active zero-power terminal

A zero-power terminal used in some scenarios may also be an active zero-power terminal, and such a device may have a built-in battery. The battery is used to drive the low-power chip circuit of the zero-power terminal, thereby achieving the signal demodulation of the forward link and the signal modulation of the reverse link. However, for the back scattering link, the zero-power terminal transmits a signal using the back scattering implementation. Therefore, zero-power consumption of such type of device is mainly reflected in the fact that a back scattering manner is used to perform signal transmission of the reverse link without a need of power of the terminal itself.

An active zero-power terminal is powered by a built-in battery to increase a communication distance of the zero-power terminal and improve the reliability of communication. Therefore, it may be applied in some scenarios with relatively high requirements for communication distance, reading delay, etc.

To facilitate understanding of the embodiments of the present disclosure, a power supply signal, a scheduling signal, and a carrier signal related to a zero-power communication will be described.

### 1. Power supply signal

A power supply signal is a source of power for power harvesting by the zero-power terminal.

A power supply signal carrier may be a base station, a smart phone, a smart gateway, a charging station, a micro base station, etc.

For a frequency band, a frequency band of a radio wave for power supply may be a low frequency, a medium frequency, a high frequency, etc.

For a waveform, a radio wave for power supply may be a sine wave, a square wave, a triangle wave, a pulse, a rectangular wave, etc.

In addition, the power supply signal may be a continuous wave or a discontinuous wave (i.e., a certain time interruption is allowed).

Optionally, the power supply signal may be an existing signal in the 3rd generation partnership project (3GPP) standard, for example, a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), and a physical broadcast channel (PBCH), or may be a WIFI signal or a Bluetooth signal.

Optionally, the power supply signal may also be achieved by adding a new signal, such as adding a signal dedicated for power supply.

### 2. Trigger signal or scheduling signal

A trigger signal is used to trigger or schedule a zero-power terminal for data transmission.

A trigger signal carrier may be a base station, a smart phone, a smart gateway, etc.

For a frequency band, a radio wave for triggering or scheduling may be a low frequency, a medium frequency, a high frequency, etc.

For a waveform, a radio wave for triggering or scheduling may be a sine wave, a square wave, a triangle wave, a pulse, rectangular wave, etc.

In addition, the trigger signal may be a continuous wave or a discontinuous wave (i.e., a certain time interruption is allowed).

Optionally, the trigger signal may be an existing signal in the 3GPP standard, for example, an SRS, a PUSCH, a PRACH, a PUCCH, a PDCCH, a PDSCH, a PBCH, or a WIFI signal or a Bluetooth signal.

Optionally, the trigger signal may also be achieved by adding a new signal, such as adding a signal dedicated to triggering or scheduling.

### 3. Carrier signal

A carrier signal is used for the zero-power terminal to generate a back scattering signal. For example, the zero-power terminal may modulate a received carrier signal according to information to be transmitted to form a back scattering signal.

A carrier signal carrier may be a base station, a smart phone, a smart gateway, etc.

For a frequency band, a radio wave used as a carrier signal may be a low frequency, a medium frequency, a high frequency, etc.

For a waveform, a radio wave used as a carrier signal may be a sine wave, a square wave, a triangle wave, a pulse, a rectangular wave, etc.

In addition, the carrier signal may be a continuous wave or a discontinuous wave (i.e., a certain time interruption is allowed).

Optionally, the carrier signal may be an existing signal in the 3GPP standard, for example, an SRS, a PUSCH, a PRACH, a PUCCH, a PDCCH, a PDSCH, a PBCH, or a WIFI signal or a Bluetooth signal.

Optionally, the carrier signal may also be achieved by adding a new signal, such as adding a carrier signal dedicated to generating a back scattering signal.

It may be noted that, in the embodiments of the present disclosure, the power supply signal, the scheduling signal and the carrier signal may be the same signal, or may be different signals. For example, the power supply signal may be used as a carrier signal, and the scheduling signal may also be used as a carrier signal.

In an 802.11 technology, a WIFI device transmits information based on a physical layer protocol data unit (PPDU) frame. The PPDU frame includes a physical layer header and a data part. As illustrated in FIG. 6, the physical layer header of the PPDU frame of 802.11a/g includes: a short training field (STF), a long training field (LTF) and a signal (SIGNAL) field.

The STF is mainly composed of 10 short symbols (t1-t10), each symbol has a duration of 0.8us, and the STF implements multiple functions, mainly including a frame synchronization and a coarse frequency synchronization. The main functions implemented by t1-t7 include signal detect, automatic gain control (AGC), and diversity selection, and the functions implemented by t8-t10 include coarse frequency (Coarse Freq), offset estimation, and timing synchronize. The LTF is mainly used to implement fine frequency synchronization and channel estimation. The SIGNAL part carries information related to the data part, including a data transmission rate, length information of a data packet, a reserved bit, and a tail bit.

Signal transmission manners supported by different types of zero-power terminals are different. In the case where a zero-power terminal supports both signal transmission manners of the active transmission and the back scattering, how to transmit a signal to take into account both the power consumption and the transmission performance of the terminal device is an urgent problem to be solved.

In order to facilitate understanding of the technical solution of the embodiments of the present disclosure, the technical solution of the present disclosure is described in detail below through specific embodiments. The above related technologies may be arbitrarily combined with the technical solution of the embodiments of the present disclosure as optional solutions, and they all belong to the protection scope of the embodiments of the present disclosure. The embodiments of the present disclosure include at least some of the following contents.

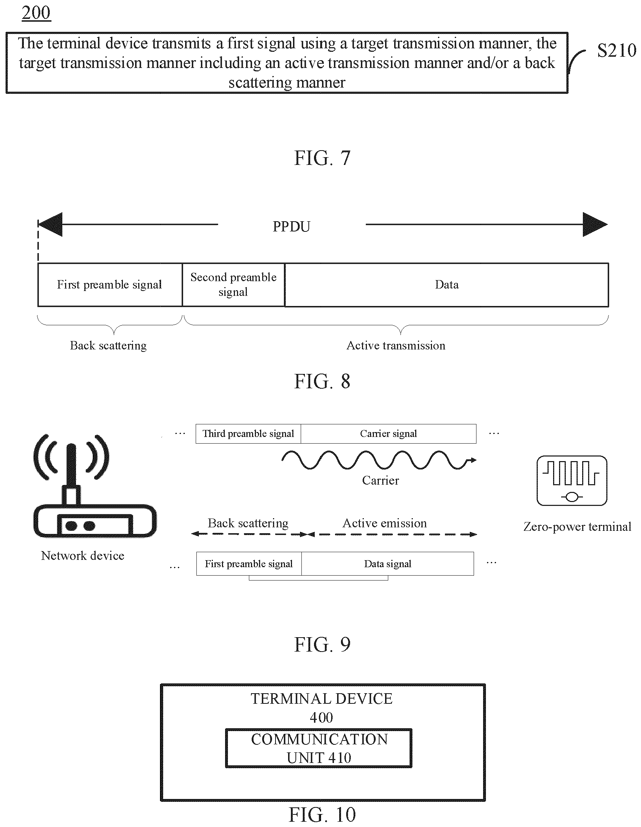

FIG. 7 is a schematic diagram of a method 200 for wireless communication according to the embodiments of the present disclosure. As illustrated in FIG. 7, the method 200 includes at least some of the following contents:
S210, a terminal device transmits a first signal using a target transmission manner, where the target transmission manner includes an active transmission manner and/or a back scattering manner.

In the embodiments of the present disclosure, the terminal device supports the active transmission manner and the back scattering manner.

Optionally, the back scattering manner may refer to a signal transmission manner in which a carrier signal is modulated to carry information to be transmitted.

Optionally, the active transmission manner may refer to a signal transmission manner in which an actively-transmitted signal is used to carry information to be transmitted without using a carrier signal.

In some embodiments, the terminal device has a functional module(s) for actively transmitting a signal, such as a PA, an LNA, a local oscillator and a crystal oscillator.

It may be understood that, the foregoing functional module(s) for actively transmitting a signal may also be used to amplify a back scattering signal in some cases to increase a communication distance of the back scattering signal. For example, the communication distance of the back scattering signal is increased by amplifying the back scattering signal through a PA or an LNA.

In some embodiments, the terminal device has a main transmitter and a back scattering transmitter.

Optionally, the back scattering transmitter supports transmission of a signal in a back scattering manner. The back scattering transmitter may not transmit a signal autonomously, and needs to modulate and reflect a received signal, so as to carry information to be transmitted.

In some embodiments, the main transmitter may actively transmit a signal to a network device or another node.

In some embodiments, the main transmitter and the back scattering transmitter may be independent modules, or the main transmitter and the back scattering transmitter may be considered to include different functional modules of the terminal device. For example, the main transmitter may include functional modules such as a power amplifier, a local oscillator, a crystal oscillator and LNA, while the back scattering transmitter may not include the above functional modules.

In other words, different signal transmission manners may correspond to whether to enable a specific functional module of the transmitter of the terminal device. Optionally, the specific functional module may include a functional module for actively transmitting a signal, such as a power amplifier, a local oscillator, a crystal oscillator and an LNA. For example, for the back scattering manner or the active transmission manner, one difference therebetween is whether a PA is used to amplify a signal. The use of a PA corresponds to the active transmission manner, which requires additional power to achieve a longer communication distance. Only back scattering a carrier signal without using a PA corresponds to the back scattering manner. For another example, whether to use a local oscillator may also correspond to different signal transmission manners. In the active transmission manner, a transmission signal is generated and modulated through a local oscillator of the transmitter, without depending on an external carrier signal. In the back scattering manner, a transmission signal is generated and modulated relying on an external carrier signal without using a local oscillator of the transmitter.

In some embodiments, the terminal device may be a zero-power terminal. The terminal device obtains power through power harvesting to operate.

In some scenarios, the terminal device may be a zero-power terminal in a WIFI system.

It may be noted that, the specific classification manner of zero-power terminals is not limited in the present disclosure. For example, zero-power terminals may be classified based on device complexity, a power supply manner, a communication manner, a modulation manner and other characteristics. For example, a zero-power terminal may be a terminal with at least one of the following characteristics: low complexity, support being powered by ambient power, support being powered by other devices, back scattering, new waveform (or simple waveform), modulation manner with low complexity.

It may be understood that, naming of a zero-power terminal is not limited in the embodiments of the present disclosure. For example, a zero-power terminal may also be called a low-power terminal, an ambient power enabled (AMP) terminal, a power harvesting-based terminal, etc.

It may also be noted that, a source of power for a zero-power terminal is not limited in the embodiments of the present disclosure. For example, the power for a zero-power terminal may come from ambient power, or the power required for operation of the zero-power terminal comes from power supply of the zero-power terminal itself, or the power of the zero-power terminal may also be provided by a network device. For example, in a WIFI system, the power for the zero-power terminal can be provided by an AP, or may be provided by a traditional terminal. For example, in a WIFI system, the power for the zero-power terminal may be provided by a STA, or may also be provided by a dedicated power supply node. The present disclosure is not limited in this regard.

It may be understood that, the specific source of ambient power is not limited in the embodiments of the present disclosure, and the ambient power may include but is not limited to solar power, pressure, temperature, etc.

In some embodiments, the terminal device is an IoT device and obtains power by harvesting ambient power. Such a terminal is also called an AMP IoT device.

A manner for transmitting a first signal will be described below in combination with specific embodiments.

### Embodiment 1

In some embodiments, the first signal includes a first partial signal and a second partial signal. The first partial signal is transmitted in the back scattering manner, and the second partial signal is transmitted in the active transmission manner.

In some embodiments, a modulation manner with high complexity is used for the first partial signal, such as OFDM, and a modulation manner with low complexity is used for the second partial signal, such as ASK. In other words, the first partial signal is of a complex waveform, while the second partial signal is of a simple waveform.

In some embodiments, the first partial signal is obtained by back scattering a carrier signal. A modulation manner with high complexity is used for the carrier signal.

Due to low complexity of the terminal device, when the terminal device needs to transmit a signal including a complex waveform and a simple waveform, the terminal device may transmit the complex waveform part in the back scattering manner, and transmit the simple waveform part in the active transmission manner.

### Embodiment 2: determining a target transmission manner of the first signal according to first information.

In some embodiments, the first information is related to that the terminal device obtains power through power harvesting.

In some embodiments, the case that the first information is related to that the terminal device obtains power through power harvesting may refer to that the first information is related to relevant information in a scenario where the terminal device needs to obtain power through power harvesting, such as power storage of the terminal device, an intensity of ambient power, and an intensity of a carrier signal. Considering the information such as power storage of the terminal device to determine a transmission manner of a signal is conducive to ensuring successful transmission of the signal.

In some embodiments, the first information includes but is not limited to at least one of: a power state of the terminal device, duration information (or transmission duration information) of the first signal, intensity information of ambient power, intensity information of a carrier signal, intensity information of a back scattering signal, type information of a signal to be transmitted, or a modulation manner of the signal to be transmitted.

The specific implementation of determining the target transmission manner of the first signal according to the first information will be described below in conjunction with specific embodiments.

### Embodiment 2-1: determining the signal transmission manner according to the power state of the terminal device.

In some embodiments, after the terminal device harvests ambient power using the power harvesting module, the terminal device stores the harvested power in the power storage unit. After the power storage unit obtains enough power, the power can drive a low-power circuit to operate for signal modulation and transmission of a reverse link. Optionally, a PA may be driven to amplify power of a signal. Compared with passive back scattering, active signal transmission may increase transmission power of a signal.

Since different power is consumed for different signal transmission manners, when determining a signal transmission manner, considering the power state information of the terminal device is conducive to avoiding the problem of signal transmission failure caused by insufficient power storage of the terminal device.

It may be understood that, in the embodiments of the present disclosure, the power state information of the terminal device may also be replaced by other expressions, such as power storage state information of the terminal device and power storage information of the terminal device. The present disclosure is not limited in this regard.

It may be understood that, the expression of the power state of the terminal device is not limited in the present disclosure. For example, the power state of the terminal device may be expressed by a charging percentage of the power storage unit, or may be expressed by an output voltage value of the power storage unit, or may further be expressed by a power storage level, where each power storage level may correspond to a corresponding driving capability. For example, a first power storage level corresponds to that "driving the transmitter to perform back scattering communication is supported", and a second power storage level corresponds to that "driving the transmitter to perform active signal transmission is supported".

In some embodiments, when the terminal device has signal transmission capabilities of back scattering and active transmission, certain conditions need to be satisfied when selecting a signal transmission manner. For the active transmission manner, the zero-power terminal needs to satisfy a certain power state to drive a relevant module to perform the active transmission.

In some embodiments, when the terminal device receives an uplink scheduling of the network device, or the terminal device needs to actively initiate an uplink data transmission, the terminal device may determine the target transmission manner of the first signal according to the current power state, for example, by determining whether the current power state supports active transmission of a signal.

In some embodiments, when the power state of the terminal device satisfies the power state required for active transmission, the first signal is transmitted using the active transmission manner.

In some embodiments, when the power state of the terminal device does not satisfy the power state required for active transmission, the first signal is transmitted using the back scattering manner, or the first signal is transmitted using the back scattering manner and the active transmission manner, i.e., a part of the first signal is transmitted using the back scattering manner, and the other part of the first signal is transmitted using the active transmission manner.

In some embodiments, whether the power state of the terminal device satisfies the power state required for active transmission may include the following. Whether the current power storage of the terminal device satisfies the power required for active transmission of the first signal, for example, the power to drive a relevant module (such as a PA, an LNA and a crystal oscillator) to operate.

In some embodiments, when the power state of the terminal device satisfies a power state threshold (such as a charging percentage threshold or an output voltage value threshold), the first signal is transmitted using the active transmission manner.

In some embodiments, when the power state of the terminal device does not satisfy the power state threshold (such as the charging percentage threshold or the output voltage value threshold), the first signal is transmitted using the back scattering manner, or the first signal is transmitted using the back scattering manner and the active transmission manner, i.e., a part of the first signal is transmitted using the back scattering manner, and the other part of the first signal is transmitted using the active transmission manner.

In some embodiments, the power state of the terminal device satisfying the power state threshold includes the following. The current power state of the terminal device is higher than the power state threshold; or the current power state of the terminal device is higher than or equal to the power state threshold.

In some embodiments, the power state of the terminal device not satisfying the power state threshold (such as the charging percentage threshold) may include the following. The current power state of the terminal device is lower than the power state threshold; or the current power state of the terminal device is lower than or equal to the power state threshold.

Optionally, the power state threshold may be a statistical value of power required to transmit a signal, or a maximum value of power required to transmit a signal.

Optionally, the power state threshold may be predefined, or may be configured by the network device.

In some embodiments, the power state of the terminal device may include an awake state and a recovery state. In the awake state, the terminal device may support the active transmission manner. In the recovery state, the terminal device needs to perform power harvesting to restore power storage of the terminal device, and in the recovery state, the terminal device may support the back scattering manner.

### Embodiment 2-2: determining the signal transmission manner according to a duration of transmitting a signal.

In some embodiments, after the terminal device harvests ambient power using the power harvesting module, the terminal device stores the harvested power in the power storage unit. After the power storage unit obtains power, a duration of driving the transmitter to operate may be different. Determining the signal transmission manner based on a duration of transmitting a signal is conducive to ensuring a successful transmission of the signal.

In some embodiments, the terminal device determines a supported active transmission communication duration, i.e., a duration of a communication supporting the active transmission manner, based on at least one of the power storage state of the terminal device, the power storage capability of the terminal device, or the power consumption of the terminal device. The active transmission communication duration is proportional to the power storage state of the terminal device.

Optionally, power consumption information of the terminal device may include power consumption of transmitting the first signal by the terminal device using the active transmission manner, for example, power consumption of driving a relevant module to operate.

It may be understood that, the power storage capability of the terminal device may also be replaced by other expressions, such as a power harvesting capability of the terminal device, and no limitation is made to this in the present disclosure.

Optionally, the power storage capability of the terminal device indicates a maximum power that the terminal device may store, or a maximum state of power harvesting of the terminal device, i.e., a maximum power storage state of the terminal device.

Optionally, the active transmission communication duration supported by the terminal device may be a maximum active transmission communication duration that the terminal device may support, and may be determined based on the power storage capability of the terminal device and the power consumption of the terminal device for example. Alternatively, the active transmission communication duration supported by the terminal device may be an active transmission communication duration that the current power storage of the terminal device may support, and may be determined based on the current power storage state of the terminal device and the power consumption of the terminal device for example.

It may be understood that, the expression of the active transmission communication duration supported by the terminal device is not limited in the present disclosure. For example, the active transmission communication duration supported by the terminal device may be expressed by the number (quantity) of time units, where the time unit may be a slot, a subframe, etc., or may also be expressed by an active transmission communication duration level, where each active transmission communication duration level corresponds to a duration range.

In some embodiments, when the terminal device receives an uplink scheduling of the network device, or the terminal device needs to actively initiate an uplink data transmission, the terminal device may determine the target transmission manner of the first signal according to the supported active transmission communication duration.

For example, if the active transmission communication duration supported by the terminal device reaches a transmission duration of the first signal, the active transmission manner is used. Alternatively, if the active transmission communication duration supported by the terminal device does not reach the transmission duration of the first signal, the back scattering manner is used, or the back scattering manner and the active transmission manner are used, for example, a part of the first signal is transmitted in the back scattering manner and the other part of the first signal is transmitted in the active transmission manner.

In some embodiments, the active transmission communication duration reaching the transmission duration of the first signal may include the following. The active transmission communication duration is greater than a frequency duration of the first signal; or the active transmission communication duration is greater than or equal to the transmission duration of the first signal.

In some embodiments, the active transmission communication duration not reaching the transmission duration of the first signal may include the following. The active transmission communication duration is less than the transmission duration of the first signal; or the active transmission communication duration is less than or equal to the frequency duration of the first signal.

In some embodiments, the first signal is a PPDU frame. If the transmission duration of the PPDU frame exceeds the active transmission communication duration supported by the terminal device, the terminal device cannot transmit the PPDU in the active transmission manner, or cannot transmit the PPDU entirely in the active transmission manner. Optionally, in this case, the terminal device may transmit a part of the PPDU in the active transmission manner and transmit the other part of the PPDU in the back scattering manner. For example, the PPDU includes a first partial signal and a second partial signal, the first partial signal includes a preamble signal, the first partial signal may be transmitted in the back scattering manner, and the second partial signal may be transmitted in the active transmission manner.

### Embodiment 2-3: determining the signal transmission manner according to the intensity information of ambient power or the power harvesting efficiency.

For a terminal device that obtains power through ambient power harvesting to operate, the efficiency of power harvesting is determined by the intensity of ambient power. Whether the terminal device can support a continuous active transmission is determined by the efficiency of power harvesting. For example, the terminal device performs power harvesting through a wireless signal, a power of the wireless signal received by the terminal device may be different, which results in that the power harvesting efficiency is also different. As a reception intensity of the wireless signal decreases, a speed at which the power harvesting module harvests and stores power decreases. When the speed of power harvesting is not enough to satisfy power consumption of active transmission (e.g., 1mw), the terminal device cannot support active transmission. For another example, the terminal device obtains power by harvesting ambient light. When an intensity of ambient light changes, for example when there is no sunlight at night, the terminal device may only transmit a signal using the back scattering manner. When sufficient light may be obtained during the day, the terminal device can support the active transmission manner. Therefore, under different ambient power intensities, the signal transmission manners supported by the terminal device are different, and accordingly, signal coverage distances are also different.

Therefore, in the embodiments of the present disclosure, for determining the target transmission manner of a signal, considering the intensity information of ambient power or the power harvesting efficiency is conducive to ensuring that the terminal device transmits the signal using a suitable transmission manner, and thus the power consumption of the terminal device is reduced, and successful transmission of the signal can be ensured.

In some embodiments, when the intensity of the ambient power satisfies a first intensity threshold, the active transmission manner is used, alternatively, when the intensity of the ambient power does not satisfy the first intensity threshold, the back scattering manner is used, or the active transmission manner and the back scattering manner are used, i.e., a part of the signal is transmitted in the back scattering manner, and the other part of the signal is transmitted in the active transmission manner.

In some embodiments, the intensity of the ambient power satisfying the first intensity threshold may include the following. The intensity of the ambient power is greater than the first intensity threshold; or the intensity of the ambient power is greater than or equal to the first intensity threshold. In some embodiments, the intensity of the ambient power not satisfying the first intensity threshold may include the following. The intensity of the ambient power is less than the first intensity threshold; or the intensity of the ambient power is less than or equal to the first intensity threshold.

In some embodiments, the first intensity threshold is predefined or configured by the network device.

In some embodiments, the first intensity threshold may be a minimum intensity of ambient power required to support continuous active transmission of the terminal device. For example, by means of the first intensity threshold, it may be ensured that the speed of power harvesting of the terminal device may satisfy the power consumption of active transmission of the terminal device.

### Example 2-4: determining the signal transmission manner according to the strength information of the carrier signal or the strength information of the back scattering signal.

In some embodiments, back scattering of the terminal device depends on the carrier signal. The strength of the back scattering signal and the communication distance of the signal are both determined by strength of the carrier signal.

In some embodiments, the strength of the back scattering signal is determined by the strength of an incident carrier signal and a loss of back scattering. For example, the loss of back scattering is generally 5dB.

In some scenarios, the strength of the back scattering signal and the strength of a signal reaching a receiving end are both determined by the location of the terminal device or the strength of the carrier signal received by the terminal device. When the strength of the back scattering signal may satisfy the communication distance requirement, for example, when the terminal device is relatively close to the receiving end of the signal, the terminal device does not need to transmit an uplink signal using the active transmission manner, and at this time, the uplink signal may be transmitted in the back scattering manner, so as to save the power consumption of the terminal device. When the strength of the back scattering signal may not satisfy the communication distance requirement, for example, when the terminal device is relatively far away from the receiving end of the signal, the terminal device needs to transmit an uplink signal using the active transmission manner, so as to increase the communication distance of the signal.

In some embodiments, the terminal device may determine the target transmission manner of the first signal based on whether the strength information of the carrier signal satisfies the communication distance requirement of the first signal. For example, when the strength information of the carrier signal satisfies the communication distance requirement of the first signal, the back scattering manner is used, alternatively, when the strength information of the carrier signal does not satisfy the communication distance requirement of the first signal, the active transmission manner is used, or the active transmission manner and the back scattering manner are used.

In some embodiments, the terminal device may determine the target transmission manner of the first signal based on the strength information of the carrier signal in conjunction with a second strength threshold. For example, when the strength information of the carrier signal satisfies the second strength threshold, the back scattering manner is determined to be used, otherwise, the active transmission manner is used, or the back scattering manner and the active transmission manner are used.

In some embodiments, the terminal device may determine the target transmission manner of the first signal based on whether the strength information of the back scattering signal satisfies the communication distance requirement of the first signal. For example, when the strength information of the back scattering signal satisfies the communication distance requirement of the first signal, the back scattering manner is used, alternatively, when the strength information of the back scattering signal does not satisfy the communication distance requirement of the first signal, the active transmission manner is used, or the active transmission manner and the back scattering manner are used.

In some embodiments, the terminal device may determine the target transmission manner of the first signal according to the strength information of the back scattering signal in conjunction with a third strength threshold. For example, when the strength information of the back scattering signal satisfies the third strength threshold, the back scattering manner is determined to be used, otherwise, the active transmission manner is used, or the back scattering manner and the active transmission manner are used.

In some embodiments, the second strength threshold may be predefined, or configured by the network device.

In some embodiments, the third strength threshold may be predefined, or configured by the network device.

In some embodiments, the strength information of the carrier signal satisfying the second strength threshold may include the following. The strength information of the carrier signal is greater than the second strength threshold; or the strength information of the carrier signal is greater than or equal to the second strength threshold.

In some embodiments, the strength information of the carrier signal not satisfying the second strength threshold may include the following. The strength information of the carrier signal is less than the second strength threshold; or the strength information of the carrier signal is less than or equal to the second strength threshold.

In some embodiments, the strength information of the back scattering signal satisfying the third strength threshold may include the following. The strength information of the back scattering signal is greater than the third strength threshold; or the strength information of the back scattering signal is greater than or equal to the third strength threshold.

In some embodiments, the strength information of the back scattering signal not satisfying the third strength threshold may include the following. The strength information of the back scattering signal is less than the third strength threshold; or the strength information of the back scattering signal is less than or equal to the third strength threshold.

In some embodiments, the second strength threshold may correspond to a certain communication distance, and the strength information of the carrier signal satisfying the second strength threshold may be understood as that a communication distance between the terminal device and the receiving end of the signal does not exceed the communication distance of the back scattering signal. Therefore, the first signal may be transmitted in the back scattering manner, which is conducive to reducing the power consumption of the terminal device.

In some embodiments, the third intensity threshold may correspond to a certain communication distance. The intensity of the back scattering signal satisfying the third intensity threshold may be understood as the that communication distance between the terminal device and the receiving end of the signal does not exceed the communication distance of the back scattering signal. Therefore, the first signal may be transmitted in the back scattering manner, which is conducive to reducing the power consumption of the terminal device.

### Embodiment 2-5: determining the signal transmission manner according to the type information of the signal to be transmitted.

In some embodiments, the type of the signal to be transmitted may include a reference signal, a channel, etc.

In some embodiments, the type of the signal to be transmitted may include a preamble, a header, data, etc.

In the embodiments of the present disclosure, the terminal device transmits a signal in a corresponding transmission manner according to the type of the signal to be transmitted, which is conducive to ensuring a successful transmission of the signal.

For example, a signal of a preamble type may be transmitted in the back scattering manner, or a signal of a data type may be transmitted in the active transmission manner.

For another example, a reference signal or channel may be transmitted in the back scattering manner.

### Embodiment 2-6: determining the signal transmission manner according to the modulation manner of the signal to be transmitted.

In some embodiments, the modulation manner of the signal to be transmitted includes a modulation manner with low complexity, such as amplitude shift keying (ASK), frequency shift keying (FSK), phase shift keying (PSK), and on-off keying (OOK), and a modulation manner with high complexity, such as orthogonal frequency division multiplexing (OFDM).

For a zero-power terminal, due to its low complexity, the zero-power terminal usually may not generate a modulation waveform with high complexity. Therefore, a signal in a modulation waveform with high complexity may be transmitted in the back scattering manner, while a signal in a modulation waveform with low complexity may be transmitted in the active transmission manner, or may be transmitted in the back scattering manner.

For example, when the modulation manner of the first signal is a first modulation manner, the first signal is transmitted using the active transmission manner.

For another example, when the modulation manner of the first signal is a second modulation manner, the first signal is transmitted using the back scattering manner.

The complexity of the first modulation manner is lower than that of the second modulation manner, i.e., the first modulation manner is a modulation manner with low complexity, and the second modulation manner is a modulation manner with high complexity.

For example, the first modulation manner may include ASK, FSK, PSK, OOK, etc.

For example, the second modulation manner may include OFDM.

### Example 3

In some embodiments of the present disclosure, the first signal includes a first partial signal and a second partial signal. The first partial signal is transmitted in the back scattering manner, and the second partial signal is transmitted in a first transmission manner. The first transmission manner includes the active transmission manner and/or the back scattering manner.

In some embodiments, for the first partial signal, a modulation manner with high complexity is used, such as OFDM, and for the second partial signal, a modulation manner with low complexity is used, such as ASK, FSK, PSK and OOK. In other words, the first partial signal is of a complex waveform, and the second partial signal is of a simple waveform.

In some embodiments, the first partial signal is obtained by back scattering a carrier signal. A high-complexity modulation manner is used for the carrier signal.

In some embodiments, the first transmission manner is determined according to the first information. The first information is related to that the terminal device obtains power through power harvesting.

In some embodiments, the first information includes but is not limited to at least one of the power state of the terminal device, the duration information (also called the transmission duration information) of the second partial signal, the intensity information of ambient power, the intensity information of the carrier signal, the intensity information of the back scattering signal, the type information of the signal to be transmitted, or the modulation manner of the signal to be transmitted.

It may be understood that, the specific implementation of determining the first transmission manner according to the first information in embodiment 3 is similar to the implementation of determining the target transmission manner of the first signal according to the first information in embodiment 2, which is not repeated herein for the sake of brevity.

It may be noted that, the embodiments of the present disclosure may be applied to any communication system, such as a traditional cellular communication system and other cellular communication systems introduced in the standard evolution, or may be applied to a WIFI system or a WLAN system, and no limitation is made to this in the present disclosure.

### Example 4

In some embodiments of the present disclosure, the first signal includes a first partial signal and a second partial signal. The first partial signal includes a first preamble signal, and the first partial signal is transmitted in the back scattering manner.

After a zero-power terminal is introduced into a WIFI system, the compatibility between the zero-power terminal and a traditional WIFI device is an issue that needs to be considered. For example, a carrier detection mechanism is used for channel sensing of the WIFI device, specifically, carrier detection is performed based on the preamble part of the PPDU frame of 802.11. The OFDM modulation manner is used for this part of the signal. Since the zero-power terminal usually only supports a modulation manner with low complexity, the zero-power terminal cannot generate a preamble signal. If the zero-power terminal cannot transmit a preamble signal, the traditional WIFI device detects no preamble signal and thus cannot detect that the zero-power terminal is using a channel, and if the traditional WIFI device also uses the channel for transmission, an interference may be caused.

Therefore, in the embodiments of the present disclosure, in the case that the zero-power terminal cannot generate a preamble signal, the back scattering manner is used to transmit the first preamble signal, so that the traditional WIFI device may detect that the zero-power terminal is using a channel according to the first preamble signal, and thus avoids using the channel for transmission, thereby avoiding an interference.

In some implementations, the second partial signal may be transmitted in the active transmission manner.

In other implementations, the second partial signal is transmitted in the first transmission manner, and the first transmission manner includes the active transmission manner and/or the back scattering manner.

In some embodiments, the first transmission manner is determined according to the first information. For the manner for determining the first transmission manner, reference may be made to the manner for determining the target transmission manner in embodiment 2, which will not be repeated herein for the sake of simplicity.

In some embodiments, the first signal may be a PPDU frame.

In some embodiments, the first signal is transmitted through a traditional 802.11 wireless interface.

In some embodiments, the second partial signal is transmitted through a zero-power wireless interface.

It may be understood that, in the embodiments of the present disclosure, the traditional 802.11 wireless interface may refer to an interface for communication between an AP device and a traditional WIFI device (such as an STA) before an introduction of the zero-power terminal. After the introduction of the zero-power terminal, the zero-power terminal may also be considered as a new WIFI device. In this case, a communication interface between the zero-power terminal and the AP device (i.e., the zero-power wireless interface) may be considered as an extended 802.11 wireless interface.

In some embodiments, the traditional 802.11 wireless interface may include an interface for communication between an AP and an STA. That is, a communication between an AP and an STA may be performed through the traditional 802.11 wireless interface.

In some embodiments, the traditional 802.11 wireless interface may refer to a communication interface that supports an 802.11 technology.

In some embodiments, a zero-power wireless interface may refer to a communication interface for a zero-power communication, or a communication interface for a communication between a zero-power terminal and another device. For example, the zero-power wireless interface may be configured to carry information transmitted by a zero-power terminal to another device, or carry information transmitted by another device to the zero-power terminal.

In some embodiments, the zero-power wireless interface is configured to transmit a modulation waveform with low complexity, such as a modulation waveform modulated with ASK, FSK, PSK, or OOK.

In some embodiments, the zero-power wireless interface may be configured for communications in the back scattering manner and the active transmission manner.

That is, the zero-power wireless interface may be configured to transmit both a back scattering signal and an active transmission signal. Optionally, in the embodiments of the present disclosure, for the back scattering manner and the active transmission manner, the same zero-power wireless interface is used, or different zero-power wireless interfaces may be used.

For example, the zero-power wireless interface includes a first zero-power wireless interface and a second zero-power wireless interface. The first zero-power wireless interface is configured for communication by the zero-power terminal in the back scattering manner, and the second zero-power wireless interface is configured for communication by the zero-power terminal in the active transmission manner.

For another example, the zero-power wireless interface includes a third zero-power wireless interface. The third zero-power wireless interface is used for communication by the zero-power terminal in the back scattering manner and for communication by the zero-power terminal in the active transmission manner.

In some embodiments, different waveforms are used for the first partial signal and the second partial signal.

For example, for the first preamble signal, a signal waveform supported by a traditional 802.11 wireless interface may be used, such as a waveform modulated with OFDM.

For example, for the second partial signal, a signal waveform supported by a zero-power wireless interface may be used, for example, a waveform modulated with ASK, FSK, PSK, or OOK with low complexity.

Specifically, since the zero-power terminal has the characteristics of low complexity and only supports simple modulation manners, such as ASK, FSK, PSK and OOK modulation, the zero-power terminal may not be able to implement an OFDM modulation supported by a WIFI device. Therefore, the waveform used in a zero-power communication is different from an OFDM-based waveform.

In some embodiments, the first preamble signal may be used for carrier detection.

In some embodiments, the first preamble signal may include an STF of a physical layer header of 802.11a/g; or, an STF and an LTF of a physical layer header of 802.1 1a/g; or, an STF, an LTF and a SIGNAL of a physical layer header of 802.11a/g.

In some embodiments, the first preamble signal may include a preamble of a physical layer header of 802.11b, or a preamble and a header of a physical layer header of 802.11b.

In some embodiments, the first partial signal may also include a header signal and/or a data signal.

In some embodiments, the second partial signal includes at least one of: a second preamble signal, a header signal, or a data (paload) signal.

It may be understood that, the specific signal composition and the signal structure of the first signal are not limited in the embodiments of the present disclosure, as long as the transmitting end and the receiving end of the first signal have the same understanding of the signal composition and the signal structure of the first signal.

In conjunction with FIG. 8, a typical implementation of a frame structure of the first signal according to the embodiments of the present disclosure will be described, but the present disclosure is not limited thereto.

As illustrated in FIG. 8, the first signal is a PPDU frame, and the frame structure of the PPDU frame may include a first preamble signal, a second preamble signal and a data signal. The first preamble part is transmitted in the back scattering manner, and the second preamble signal and the data signal are transmitted by the active transmission manner.

FIG. 9 is a schematic diagram of signal transmission performed between a zero-power terminal and a network device provided in the embodiments of the present disclosure. As illustrated in FIG. 9, the network device may transmit a third preamble signal and a carrier signal, and the zero-power terminal may perform back scattering on the third preamble signal to transmit the first preamble signal, and then transmit the data signal in the active transmission manner. In this way, the signal transmitted by the zero-power terminal includes a preamble that may be recognized by a traditional WIFI device, thereby achieving the compatibility between the zero-power terminal and the traditional WIFI device.

In summary, in the embodiments of the present disclosure, the terminal device may transmit the first signal in the active transmission manner and/or the back scattering manner, which is conducive to transmitting the first signal by the terminal device in a suitable transmission manner, thereby taking into account both the power consumption and the transmission performance of the terminal device.

For example, different transmission manners are used for different parts of the first signal. For example, the back scattering manner is used for the first partial signal, and the active transmission manner is used for the second partial signal.

For another example, the manner for transmitting the first signal is determined according to the first information.

For another example, in a WIFI scenario, the first partial signal is transmitted in the back scattering manner, and the first partial signal includes a preamble signal. The second partial signal is transmitted in the active transmission manner, and the second partial signal is used to carry information to be transmitted by the terminal device.

For another example, in a WIFI scenario, the first partial signal is transmitted in the back scattering manner, and the first partial signal includes a preamble signal. The manner for transmitting the second partial signal is determined according to the first information, and the second partial signal is used to carry information to be transmitted by the terminal device.

The method embodiments of the present disclosure are described in detail in conjunction with FIG. 7 to FIG. 9. In conjunction with FIG. 10 to FIG. 13, the device embodiments of the present disclosure will be described in detail below. It may be understood that, the device embodiments and the method embodiments correspond to one another, and the method embodiments may be referred to for similar descriptions.

FIG. 10 is a schematic block diagram of a terminal device 400 according to the embodiments of the present disclosure. As illustrated in FIG. 10, the terminal device 400 includes: a communication unit 40 configured to transmit a first signal using a target transmission manner. The target transmission manner includes an active transmission manner and/or a back scattering manner.

In some embodiments, the target transmission manner is determined according to first information, and the first information is related to that the terminal device obtains power through power harvesting.

In some embodiments, the first signal includes a first partial signal and a second partial signal, where the first partial signal is transmitted in the back scattering manner, and the second partial signal is transmitted in the active transmission manner.

In some embodiments, the first signal includes a first partial signal and a second partial signal, wherein the first partial signal is transmitted in the back scattering manner, and the second partial signal is transmitted in a first transmission manner, wherein the first transmission manner includes the active transmission manner and/or the back scattering manner.

In some embodiments, the first transmission manner is determined according to the first information, and the first information is related to that the terminal device obtains the power through the power harvesting.

In some embodiment, the first partial signal includes a first preamble signal.

In some embodiments, a signal waveform supported by a traditional 802.11 wireless interface is used for the first preamble signal.

In some embodiments, the second partial signal includes at least one of: a second preamble signal, a header signal, and a data signal.

In some embodiments, a signal waveform supported by a zero-power wireless interface is used for the second partial signal.

In some embodiments, the first information includes at least one of: a power state of the terminal device, duration information of the first signal, intensity information of ambient power, intensity information of a carrier signal, intensity information of a back scattering signal, type information of a signal to be transmitted, or a modulation manner of the signal to be transmitted.

In some embodiments, transmitting, by the terminal device, the first signal using the target transmission manner includes the following. The first signal is transmitted using the active transmission manner in a case where the power state of the terminal device satisfies a power state required for active transmission; or the first signal is transmitted using the back scattering manner or the first signal is transmitted using both the back scattering manner and the active transmission manner, in a case where the power state of the terminal device does not satisfy the power state required for the active transmission.

In some embodiments, the communication unit 410 is further configured to: transmit the first signal using the active transmission manner in a case where an active transmission communication duration supported by the terminal device satisfies the duration information of the first signal; or transmit the first signal using the back scattering manner or transmit the first signal using both the back scattering manner and the active transmission manner, in a case where the active transmission communication duration supported by the terminal does not satisfy the duration information of the first signal.

13. The method according to claim 12, the active transmission communication duration supported by the terminal device is determined according to at least one of: the power state of the terminal device, a power storage capability of the terminal device, or power consumption of the terminal device.

In some embodiments, the communication unit 410 is further configured to: transmit the first signal using the active transmission manner in a case where the intensity information of the ambient power supports that the terminal device transmits a signal using the active transmission manner or the intensity information of the ambient power satisfies a first intensity threshold; or transmit the first signal using the back scattering manner or transmit the first signal using the back scattering manner and the active transmission manner, in a case where the intensity information of the ambient power does not support that the terminal device transmits a signal using the active transmission manner or the intensity information of the ambient power satisfies the first intensity threshold.

In some embodiments, the communication unit 410 is further configured to: transmit the first signal using a reverse transmission manner in a case where intensity information of a carrier signal satisfies a second intensity threshold; or transmit the first signal using an active scattering manner or transmit the first signal using both the back scattering manner and the active transmission manner, in a case where the intensity information of the carrier signal does not satisfy the second intensity threshold.

In some embodiments, the strength information of the carrier signal is higher than the second strength threshold; or the strength information of the carrier signal is higher than or equal to the second strength threshold.

In some embodiments, the strength information of the carrier signal is lower than the second strength threshold; or the strength information of the carrier signal is lower than or equal to the second strength threshold.

In some embodiments, the communication unit 410 is further configured to: transmit the first signal using the reverse transmission manner in a case where the strength information of the back scattering signal satisfies a third strength threshold; or transmit the first signal using the active scattering manner or transmit the first signal using both the back scattering manner and the active transmission manner, in a case where the strength information of the back scattering signal does not satisfy the third strength threshold.

In some embodiments, the case that the strength information of the back scattering signal satisfies the third strength threshold includes the following: the strength information of the back scattering signal is higher than the third strength threshold; or the strength information of the back scattering signal is higher than or equal to the third strength threshold.

In some embodiments, the case that the strength information of the back scattering signal does not satisfy the third strength threshold includes the following: the strength information of the back scattering signal is lower than the third strength threshold; or the strength information of the back scattering signal is lower than or equal to the third strength threshold.

In some embodiments, the communication unit 410 is further configured to: transmit the first signal using the active transmission manner in a case where a modulation manner of the first signal is a first modulation manner; or transmit the first signal using the back scattering manner in a case where the modulation manner of the first signal is a second modulation manner, where the first modulation manner has lower complexity than the second modulation manner.

Optionally, in some embodiments, the foregoing communication unit may be a communication interface or a transceiver, or an input and output interface of a communication chip or a system on chip. The foregoing processing unit may be one or more processors.

It may be understood that, the terminal device 400 according to the embodiments of the present disclosure may correspond to the terminal device in the method embodiments of the present disclosure, and the foregoing and other operations and/or functions of various units in the terminal device 400 are configured to respectively implement the corresponding processes of the terminal device in the method illustrated in FIG. 7 to FIG. 9, which are not repeated herein for the sake of brevity.

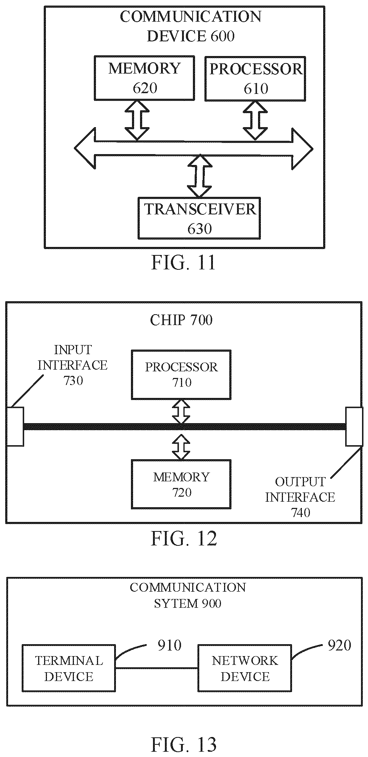

FIG. 11 is a schematic structural diagram of a communication device 600 provided in the embodiments of the present disclosure. The communication device 600 illustrated in FIG. 11 includes a processor 610, and the processor 610 may invoke and execute a computer program in a memory to implement the method in the embodiments of the present disclosure.

Optionally, as illustrated in FIG. 11, the communication device 600 may further include a memory 620. The processor 610 may invoke and execute a computer program in the memory 620 to implement the method in the embodiments of the present disclosure.

The memory 620 may be a separate device independent of the processor 610, or may be integrated in the processor 610.

Optionally, as illustrated in FIG. 11, the communication device 600 may further include a transceiver 630, and the processor 610 may control the transceiver 630 to communicate with other devices, specifically, to transmit information or data to other devices, or to receive information or data transmitted by other devices.

The transceiver 630 may include a transmitter and a receiver. The transceiver 630 may further include an antenna, and a quantity of the antenna may be one or more.

Optionally, the communication device 600 may specifically be a network device in the embodiments of the present disclosure, and the communication device 600 may implement the corresponding processes implemented by the network device in the methods in the embodiments of the present disclosure, which will not be described here for the sake of brevity.

Optionally, the communication device 600 may be a mobile terminal/terminal device in the embodiments of the present disclosure, and the communication device 600 may implement the corresponding processes implemented by the mobile terminal/terminal device in the methods of the embodiments of the present disclosure, which will not be described in detail for the sake of brevity.

FIG. 12 is a schematic structural diagram of a chip in the embodiments of the present disclosure. The chip 700 illustrated in FIG. 12 includes a processor 710, and the processor 710 may invoke and execute a computer program in a memory to implement the method in the embodiments of the present disclosure.

Optionally, as illustrated in FIG. 12, the chip 700 may also include a memory 720. The processor 710 may invoke and execute a computer program in the memory 720 to implement the method in the embodiments of the present disclosure.

The memory 720 may be a separate device independent of the processor 710, or may be integrated in the processor 710.

Optionally, the chip 700 may also include an input interface 730. The processor 710 may control the input interface 730 to communicate with other devices or chips, and specifically, may obtain information or data transmitted by other devices or chips.

Optionally, the chip 700 may also include an output interface 740. The processor 710 may control the output interface 740 to communicate with other devices or chips, and specifically, may output information or data to other devices or chips.

Optionally, the chip may be applied to the network device in the embodiments of the present disclosure, and the chip may implement the corresponding processes implemented by the network device in the methods of the embodiments of the present disclosure, which will not be described in detail for the sake of brevity.

Optionally, the chip may be applied to the mobile terminal/terminal device in the embodiments of the present disclosure, and the chip may implement the corresponding processes implemented by the mobile terminal/terminal device in the methods of the embodiments of the present disclosure, which will not be described in detail for the sake of brevity.

It may be understood that, the chip mentioned in the embodiments of the present disclosure may also be referred to as a system-level chip, a system chip, a chip system or a system-on-chip chip, etc.

FIG. 13 is a schematic block diagram of a communication system 900 provided in the embodiments of the present disclosure. As illustrated in FIG. 13, the communication system 900 includes a terminal device 910 and a network device 920.

The terminal device 910 may be configured to implement the corresponding functions implemented by the terminal device in the above method, and the network device 920 may be configured to implement the corresponding functions implemented by the network device in the above method, which will not be repeated here for the sake of brevity.

It may be understood that, the processor in the embodiments of the present disclosure may be an integrated circuit chip with signal processing capabilities. In the implementation process, each step of the above method embodiments may be implemented by an integrated logic circuit of hardware in the processor or an instruction in the form of software. The foregoing processor may be a general processor, a digital signal processor (DSP), an application specific integrated circuit (ASIC), a field programmable gate array (FPGA) or other programmable logic devices, discrete gates or transistor logic devices, or discrete hardware components, which may implement or execute the methods, steps and logic block diagrams disclosed in the embodiments of the disclosure. The general processor may be a microprocessor or the processor may also be any conventional processor. The steps of the method disclosed in the embodiments of the present disclosure may be directly executed by a hardware decoding processor, or executed by a combination of hardware and software modules in a decoding processor. The software module may be located in a mature storage medium in the field, such as a random access memory, a flash memory, a read-only memory, a programmable read-only memory or an electrically erasable programmable memory, and a register. The storage medium is located in the memory, and the processor reads information in the memory and completes the steps of the above method in combination with its hardware.

It may be understood that, the memory in the embodiments of the present disclosure may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external cache. By way of exemplary illustration and not limitation, many forms of RAM are available, such as static RAM (SRAM), dynamic RAM (DRAM), synchronous DRAM (SDRAM), double data rate SDRAM (DDR SDRAM), enhanced SDRAM (ESDRAM), synch link DRAM (SLDRAM), and direct rambus RAM (DR RAM). It should be noted that the memory in the system and method described herein is intended to include, but is not limited to, these and any other suitable types of memory.

It may be understood that, the foregoing memory is exemplary but not restrictive. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), or a synch link DRAM (SLDRAM) and a direct rambus RAM (DR RAM). That is, the memory in the embodiments of the present disclosure is intended to include but not limited to these and any other suitable types of memory.

The embodiments of the present disclosure further provide a computer-readable storage medium for storing a computer program.

Optionally, the computer-readable storage medium may be applied to the network device in the embodiments of the present disclosure, and the computer program causes the computer to execute the corresponding processes implemented by the network device in various methods of the embodiments of the present disclosure, which will not be repeated here for the sake of brevity.

Optionally, the computer-readable storage medium may be applied to the mobile terminal/terminal device in the embodiments of the present disclosure, and the computer program causes the computer to execute the corresponding processes implemented by the mobile terminal/terminal device in various methods of the embodiments of the present disclosure, which will not be repeated here for the sake of brevity.

The embodiments of the present disclosure further provide a computer program product, and the computer program product includes a computer program instruction.

Optionally, the computer program product may be applied to the network device in the embodiments of the present disclosure, and the computer program instruction causes the computer to execute the corresponding processes implemented by the network device in various methods of the embodiments of the present disclosure, which will not be repeated here for the sake of brevity.

Optionally, the computer program product may be applied to the mobile terminal/terminal device in the embodiments of the present disclosure, and the computer program instruction causes the computer to execute the corresponding processes implemented by the mobile terminal/terminal device in various methods of the embodiments of the present disclosure, which will not be repeated here for the sake of brevity.

The embodiments of the present disclosure further provide a computer program.

Optionally, the computer program may be applied to the network device in the embodiments of the present disclosure. When operated on a computer, the computer program causes the computer to execute the corresponding processes implemented by the network device in various methods of the embodiments of the present disclosure, which will not be repeated here for the sake of brevity.

Optionally, the computer program may be applied to the mobile terminal/terminal device in the embodiments of the present disclosure. When operated on a computer, the computer program causes the computer to execute the corresponding processes implemented by the mobile terminal/terminal device in various methods of the embodiments of the present disclosure, which will not be repeated here for the sake of brevity.

Those of ordinary skill in the art may realize that the units and algorithm steps of various examples described in combination with the embodiments disclosed herein may be implemented in electronic hardware, or a combination of computer software and electronic hardware. Whether these functions are implemented in hardware or software depends on the specific application and design constraints of the technical solution. Professional and technical personnel may use different methods to implement the described functions for each specific application, but such implementation should not be considered to be beyond the scope of the present disclosure.

Those of ordinary skill in the art may clearly understand that for the convenience and brevity of description, the specific working processes of the foregoing system, device and unit may refer to the corresponding processes in the foregoing method embodiments, and they will not be repeated here.

In the several embodiments provided in the present disclosure, it should be understood that the disclosed system, device and method may be implemented in other manners. For example, the device embodiments described above are only exemplary. For example, the division of the units is only a logical function division, and there may be other division manners in the actual implementation, for example, multiple units or components may be combined or integrated into another system, or some features may be ignored or not executed. Another point is that a mutual coupling or a direct coupling or a communication connection illustrated or discussed may be an indirect coupling or a communication connection of devices or units through some interfaces, and they may be electrical, mechanical or in other forms.

The units described as separate components may or may not be physically separated, and the components illustrated as units may or may not be physical units, that is, they may be located in one place, or they may be distributed on multiple network units. Some or all of the units may be selected according to actual needs to achieve the purpose of the solution of the present embodiment.

In addition, various functional units in various embodiments of the present disclosure may be integrated into one processing unit, or each unit may exist physically separately, or two or more units may be integrated into one unit.

If the functions are implemented in the form of software functional units and sold or used as independent products, they may be stored in a computer-readable storage medium. Based on such understanding, the technical solution of the present disclosure in substance or the part thereof making contributions to the prior art or a part of the technical solution may be embodied in the form of a software product. The computer software product is stored in a storage medium and includes several instructions causing a computer device (which may be a personal computer, a server, or a network device) to execute all or some of the steps of the methods described in various embodiments of the present disclosure. The foregoing storage medium includes various media that may store program codes, such as a U disk, a mobile hard disk, a read-only memory (ROM), a random access memory (RAM), and a magnetic disk or an optical disk.

The above descriptions are only specific implementations of the present disclosure, but the protection scope of the present disclosure is not limited to this. Modifications or substitutions easily conceivable for those familiar with the art within the technical scope disclosed in the present disclosure should be covered by the protection scope of the present disclosure. Therefore, the protection scope of the present disclosure should be based on the protection scope of the claims.

## Claims

1. A method for wireless communication, comprising:
transmitting, by a terminal device, a first signal using a target transmission manner, wherein the target transmission manner comprises an active transmission manner and/or a back scattering manner.

2. The method according to claim 1, wherein the target transmission manner is determined according to first information, wherein the first information is related to that the terminal device obtains power through power harvesting.

3. The method according to claim 1 or 2, wherein the first signal comprises a first partial signal and a second partial signal, wherein the first partial signal is transmitted in the back scattering manner, and the second partial signal is transmitted in the active transmission manner.

4. The method according to claim 1 or 2, wherein the first signal comprises a first partial signal and a second partial signal, wherein the first partial signal is transmitted in the back scattering manner, and the second partial signal is transmitted in a first transmission manner, wherein the first transmission manner comprises the active transmission manner and/or the back scattering manner.

5. The method according to claim 4, wherein the first transmission manner is determined according to first information, wherein the first information is related to that the terminal device obtains power through power harvesting.

6. The method according to any one of claims 3 to 5, wherein the first partial signal comprises a first preamble signal.

7. The method according to claim 6, wherein a signal waveform supported by a traditional 802.11 wireless interface is used for the first preamble signal.

8. The method according to any one of claims 3 to 7, wherein the second partial signal comprises at least one of: a second preamble signal, a header signal, or a data signal.

9. The method according to claim 8, wherein a signal waveform supported by a zero-power wireless interface is used for the second partial signal.

10. The method according to claim 2 or 5, wherein the first information comprises at least one of:
a power state of the terminal device;
duration information of the first signal;
intensity information of ambient power;
intensity information of a carrier signal;
intensity information of a back scattering signal;
type information of a signal to be transmitted; or
a modulation manner of the signal to be transmitted.

11. The method according to any one of claims 1 to 10, wherein transmitting, by the terminal device, the first signal using the target transmission manner comprises:
transmitting the first signal using the active transmission manner in a case where a power state of the terminal device satisfies a power state required for active transmission; or
transmitting the first signal using the back scattering manner or transmitting the first signal using both the back scattering manner and the active transmission manner, in a case where the power state of the terminal device does not satisfy the power state required for active transmission.

12. The method according to any one of claims 1 to 11, wherein transmitting, by the terminal device, the first signal using the target transmission manner comprises:
transmitting the first signal using the active transmission manner in a case where an active transmission communication duration supported by the terminal device satisfies duration information of the first signal; or
transmitting the first signal using the back scattering manner or transmitting the first signal using both the back scattering manner and the active transmission manner, in a case where the active transmission communication duration supported by the terminal does not satisfy the duration information of the first signal.

13. The method according to claim 12, wherein the active transmission communication duration supported by the terminal device is determined according to at least one of: a power state of the terminal device, a power storage capability of the terminal device, or power consumption of the terminal device.

14. The method according to any one of claims 1 to 13, wherein transmitting, by the terminal device, the first signal using the target transmission manner comprises:
transmitting the first signal using the active transmission manner in a case where intensity information of ambient power supports that the terminal device transmits a signal using the active transmission manner or the intensity information of the ambient power satisfies a first intensity threshold; or
transmitting the first signal using the back scattering manner or transmitting the first signal using both the back scattering manner and the active transmission manner, in a case where the intensity information of the ambient power does not support that the terminal device transmits a signal using the active transmission manner or the intensity information of the ambient power satisfies the first intensity threshold.

15. The method according to any one of claims 1 to 14, wherein transmitting, by the terminal device, the first signal using the target transmission manner comprises:
transmitting the first signal using a reverse transmission manner in a case where intensity information of a carrier signal satisfies a second intensity threshold; or
transmitting the first signal using an active scattering manner or transmitting the first signal using both the back scattering manner and the active transmission manner, in a case where the intensity information of the carrier signal does not satisfy the second intensity threshold.

16. The method according to claim 15, wherein the case that the strength information of the carrier signal satisfies the second strength threshold comprises:
the strength information of the carrier signal is higher than the second strength threshold; or
the strength information of the carrier signal is higher than or equal to the second strength threshold.

17. The method according to claim 15 or 16, wherein the case that the strength information of the carrier signal does not satisfy the second strength threshold comprises:
the strength information of the carrier signal is lower than the second strength threshold; or
the strength information of the carrier signal is lower than or equal to the second strength threshold.

18. The method according to any one of claims 1 to 17, wherein transmitting, by the terminal device, the first signal using the target transmission manner comprises:
transmitting the first signal using a reverse transmission manner in a case where strength information of a back scattering signal satisfies the third strength threshold; or
transmitting the first signal using the active scattering manner or transmitting the first signal using both the back scattering manner and the active transmission manner, in a case where the strength information of the back scattering signal does not satisfy the third strength threshold.

19. The method according to claim 18, wherein the case that the strength information of the back scattering signal satisfies the third strength threshold comprises:
the strength information of the back scattering signal is higher than the third strength threshold; or
the strength information of the back scattering signal is higher than or equal to the third strength threshold.

20. The method according to claim 18 or 19, wherein the case that the strength information of the back scattering signal does not satisfy the third strength threshold comprises:
the strength information of the back scattering signal is lower than the third strength threshold; or
the strength information of the back scattering signal is lower than or equal to the third strength threshold.

21. The method according to any one of claims 1 to 20, wherein transmitting, by the terminal device, the first signal using the target transmission manner comprises:
transmitting the first signal using the active transmission manner in a case where a modulation manner of the first signal is a first modulation manner; or
transmitting the first signal using the back scattering manner in a case where the modulation manner of the first signal is a second modulation manner;
wherein the first modulation manner has lower complexity than the second modulation manner.

22. A terminal device, comprising:
a communication unit configured to transmit a first signal using a target transmission manner, wherein the target transmission manner comprises an active transmission manner and/or a back scattering manner.

23. The terminal device according to claim 22, wherein the target transmission manner is determined according to first information, wherein the first information is related to that the terminal device obtains power through power harvesting.

24. The terminal device according to claim 22 or 23, wherein the first signal comprises a first partial signal and a second partial signal, wherein the first partial signal is transmitted in the back scattering manner, and the second partial signal is transmitted in the active transmission manner.

25. The terminal device according to claim 22 or 23, wherein the first signal comprises a first partial signal and a second partial signal, wherein the first partial signal is transmitted in the back scattering manner, and the second partial signal is transmitted in a first transmission manner, wherein the first transmission manner comprises the active transmission manner and/or the back scattering manner.

26. The terminal device according to claim 25, wherein the first transmission manner is determined according to first information, wherein the first information is related to that the terminal device obtains the power through the power harvesting.

27. The terminal device according to any one of claims 24 to 26, wherein the first partial signal comprises a first preamble signal.

28. The terminal device according to claim 27, wherein a signal waveform supported by a traditional 802.11 wireless interface is used for the first preamble signal.

29. The terminal device according to any one of claims 24 to 28, wherein the second partial signal comprises at least one of: a second preamble signal, a header signal, or a data signal.

30. The terminal device according to claim 29, wherein a signal waveform supported by a zero-power wireless interface is used for the second partial signal.

31. The terminal device according to claim 23 or 26, wherein the first information comprises at least one of:
a power state of the terminal device;
duration information of the first signal;
intensity information of ambient power;
intensity information of a carrier signal;
intensity information of a back scattering signal;
type information of a signal to be transmitted; or
a modulation manner of the signal to be transmitted.

32. The terminal device according to any one of claims 22 to 31, wherein the communication unit is further configured to:
transmit the first signal using the active transmission manner in a case where a power state of the terminal device satisfies a power state required for active transmission; or
transmit the first signal using the back scattering manner or transmit the first signal using both the back scattering manner and the active transmission manner, in a case where the power state of the terminal device does not satisfy the power state required for active transmission.

33. The terminal device according to any one of claims 22 to 32, wherein the communication unit is further configured to:
transmit the first signal using the active transmission manner in a case where active transmission communication duration supported by the terminal device satisfies duration information of the first signal; or
transmit the first signal using the back scattering manner or transmit the first signal using both the back scattering manner and the active transmission manner, in a case where the active transmission communication duration supported by the terminal does not satisfy the duration information of the first signal.

34. The terminal device according to claim 33, wherein the active transmission communication duration supported by the terminal device is determined according to at least one of: a power state of the terminal device, a power storage capability of the terminal device, or power consumption of the terminal device.

35. The terminal device according to any one of claims 22 to 34, wherein the communication unit is further configured to:
transmit the first signal using the active transmission manner in a case where intensity information of ambient power supports that the terminal device transmits a signal using the active transmission manner or the intensity information of the ambient power satisfies a first intensity threshold; or
transmit the first signal using the back scattering manner or transmit the first signal using both the back scattering manner and the active transmission manner, in a case where the intensity information of the ambient power does not support that the terminal device transmits a signal using the active transmission manner or the intensity information of the ambient power satisfies the first intensity threshold.

36. The terminal device according to any one of claims 22 to 35, wherein the communication unit is further configured to:
transmit the first signal using a reverse transmission manner in a case where intensity information of a carrier signal satisfies a second intensity threshold; or
transmit the first signal using an active scattering manner or transmit the first signal using both the back scattering manner and the active transmission manner, in a case where the intensity information of the carrier signal does not satisfy the second intensity threshold.

37. The terminal device according to claim 36, wherein the case that the strength information of the carrier signal satisfies the second strength threshold comprises:
the strength information of the carrier signal is higher than the second strength threshold; or
the strength information of the carrier signal is higher than or equal to the second strength threshold.

38. The terminal device according to claim 36 or 37, wherein the case that the strength information of the carrier signal does not satisfy the second strength threshold comprises:
the strength information of the carrier signal is lower than the second strength threshold; or
the strength information of the carrier signal is lower than or equal to the second strength threshold.

39. The terminal device according to any one of claims 22 to 38, wherein the communication unit is further configured to:
transmit the first signal using a reverse transmission manner in a case where strength information of a back scattering signal satisfies a third strength threshold; or
transmit the first signal using the active scattering manner or transmit the first signal using both the back scattering manner and the active transmission manner, in a case where the strength information of the back scattering signal does not satisfy the third strength threshold.

40. The terminal device according to claim 39, wherein the case that the strength information of the back scattering signal satisfies the third strength threshold comprises:
the strength information of the back scattering signal is higher than the third strength threshold; or
the strength information of the back scattering signal is higher than or equal to the third strength threshold.

41. The terminal device according to claim 39 or 40, wherein the case that the strength information of the back scattering signal does not satisfy the third strength threshold comprises:
the strength information of the back scattering signal is lower than the third strength threshold; or
the strength information of the back scattering signal is lower than or equal to the third strength threshold.

42. The terminal device according to any one of claims 22 to 41, wherein transmitting, by the terminal device, the first signal using the target transmission manner comprises:
transmitting the first signal using the active transmission manner, in a case where a modulation manner of the first signal is a first modulation manner; or
transmitting the first signal using the back scattering manner, in a case where the modulation manner of the first signal is a second modulation manner;
wherein the first modulation manner has lower complexity than the second modulation manner.

43. A terminal device, comprising: a processor and a memory, wherein the memory is configured to store a computer program, and the processor is configured to invoke and execute the computer program stored in the memory to implement the method according to any one of claims 1 to 21.

44. A chip, comprising: a processor configured to invoke and execute a computer program in a memory, so as to cause a device equipped with the chip to implement the method according to any one of claims 1 to 21.

45. A computer-readable storage medium, configured to store a computer program, the computer program causing a computer to implement the method according to any one of claims 1 to 21.

46. A computer program product, comprising a computer program instruction, the computer program instruction causing a computer to implement the method according to any one of claims 1 to 21.

47. A computer program, configured to cause a computer to implement the method according to any one of claims 1 to 21.
